# EUROPEAN PATENT SPECIFICATION

(11) **EP 1 793 179 B1**
(45) Date of publication and mention of the grant of the patent: **11.04.2018**
(21) Application number: 05765138.2
(22) Date of filing: 27.06.2005
(51) Int. Cl.: F25B 13/00, F24F 1/50, F25B 6/04

(54) **MULTI-TYPE AIR CONDITIONER**
MULTI-KLIMAANLAGE
CLIMATISEUR MULTITYPE

(30) Priority: 30.06.2004 JP 2004194976
(43) Date of publication of application: 06.06.2007
(73) Proprietor: Toshiba Carrier Corporation, Kawasaki-Shi, Kanagawa 212-8585 (JP)
(72) Inventor: NAKAMURA, Yoshiro, c/o Toshiba Carrier Corp., Fuji-Shi, Shizuoka-Ken (JP)
(74) Representative: Kramer Barske Schmidtchen Patentanwälte PartG mbB
(86) International application number: PCT/JP2005/011725
(87) International publication number: WO 2006/003860

(56) References cited:
- EP-A- 0 027 604
- JP-A- 3 039 870
- JP-A- 3 063 471
- JP-A- 5 332 637
- JP-A- 5 332 637
- JP-A- 11 118 199
- JP-A- 2003 042 586
- US-A- 4 774 813

## Description

### Technical Field

The present invention relates to a multi-type air conditioner having a plurality of indoor units, and, more particularly, to a multi-type air conditioner which allows the indoor units to carry out cooling and heating operations at the same time.

### Background Art

In offices, buildings and the like, there is a large difference in room temperature depending on locations due to the influence of sun light and the like, and in computer rooms, for example, cooling is required throughout year. Accordingly, it is preferable to employ a multi-type air conditioner which selectively carries out cooling and heating operations by the indoor units connected to one refrigerant pipe system.

The multi-type air conditioner can carry out overall cooling operation, in which all the indoor units can carry out cooling, overall heating operation, in which all the indoor units carry out heating, and carry out simultaneous cooling/heating operation. Further, the simultaneous cooling/heating operation includes mainly cooling operation having a large cooling capacity and mainly heating operation having a large heating capacity according to a difference of capacity between a cooling capacity and a heating capacity required by indoor side.

Since it is necessary for such multi-type air conditioner to carry out the simultaneous cooling/heating operation as described above in various operating conditions, in a known a multi-type air conditioner, a plurality of outdoor heat exchangers are disposed in outdoor units and the number of heat exchangers and the capacities thereof to be used are switched depending on the operating conditions.

For example, Japanese Unexamined Patent Application Publication No. 5-332637 A (forming the preamble of claim 1) discloses a multi-type air conditioner which is provided with large and small outdoor heat exchangers having a different heat exchange capacity, and when an outdoor heat exchanger is used as a condenser in simultaneous cooling/heating operation, a refrigerant is supplied to the small capacity outdoor heat exchanger at all times. Further, in an outdoor unit, the small capacity outdoor heat exchanger is disposed on the large capacity outdoor heat exchanger, and an outdoor blower is disposed in an upper portion of the outdoor unit at a position near to the small capacity outdoor heat exchanger.

However, in the above arrangement, since the small capacity outdoor heat exchanger acting as the condenser is located in the vicinity of the outdoor blower, an amount of air flow passing through the small capacity outdoor heat exchanger increases, and hence, a heat exchanging amount (amount of heat radiation) is increased and condensation pressure is lowered.

Accordingly, there is a drawback in that when an outside temperature is low, a heating capacity is lowered and a room is unlike to be heated because sufficient condensation pressure cannot be maintained in the indoor heat exchanger of the indoor unit that carry out heating operation.

EP 0 027 604 A2 discloses an apparatus and a method for defrosting a dual refrigeration circuit system.

JP 03-063471 A, JP 03-039870 A, US 4 774 813 A, JP 2003-042586 A and JP 11-118199 A disclose further air conditioners.

### Disclosure of The Invention

The present invention was conceived in consideration of the above circumstances and an object of the present invention is to provide a multi-type air conditioner which can prevent reduction of a heating capacity in simultaneous cooling/heating operation even if an outside temperature is low.

A multi-type air conditioner provided for achieving the above object comprises:
an outdoor unit provided with an outdoor controller;
a plurality of indoor units provided with indoor controllers;
switching units for switching operation of the plurality of indoor units; and
a main pipe composed of a liquid pipe, a gas ejection pipe and a gas suction pipe for connecting the outdoor unit to the plurality of indoor units through the switching units, in which an overall cooling operation in which all the indoor units performs a cooling operation, an overall heating operation in which all the indoor units performs a heating operation and a simultaneous cooling/heating operation in which the indoor units perform cooling and heating operation simultaneously,
wherein the outdoor unit constitutes an outdoor heat exchanging unit including a first outdoor heat exchanger used as a condenser in the cooling operation and used as an evaporator in the heating operation and a second outdoor heat exchanger used as a condenser in the simultaneous cooling/heating operation, and the second outdoor heat exchanger is disposed on an upstream side of the first outdoor heat exchanger in an air flow direction.

In a preferred embodiment, it is desirable that the outdoor unit includes an outdoor blower blowing out air upward, the outdoor blower is disposed above the first outdoor heat exchanger, and the second outdoor heat exchanger is disposed below the first outdoor heat exchanger.

It is also desirable that the second outdoor heat exchanger has a capacity of 15% to 30% with respect to a capacity of the first outdoor heat exchanger.

According to the multi-type air conditioner of the present invention having the characteristic features described above, even if an outside temperature is low, deterioration of a heating capacity can be prevented by keeping condensation pressure and the overall heating operation, the overall cooling operation, and the simultaneous cooling/heating operation can be carried out in modes in which the plurality of indoor units are controlled.

### Brief Description of the Drawings

Fig. 1 is a system diagram of a refrigeration cycle of a multi-type air conditioner according to an embodiment of the present invention.

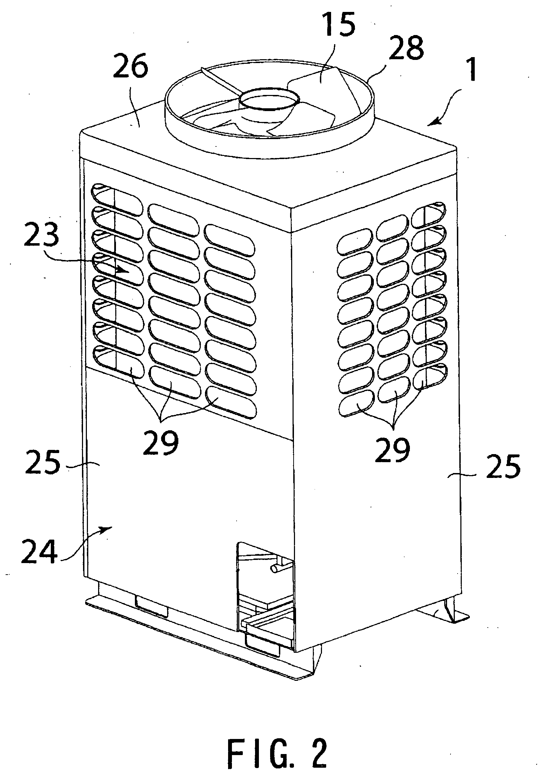

Fig. 2 is an outside perspective view of an indoor unit according to the embodiment of the present invention.
Fig. 3 is a schematic sectional view of the outdoor unit according to the embodiment of the present invention.

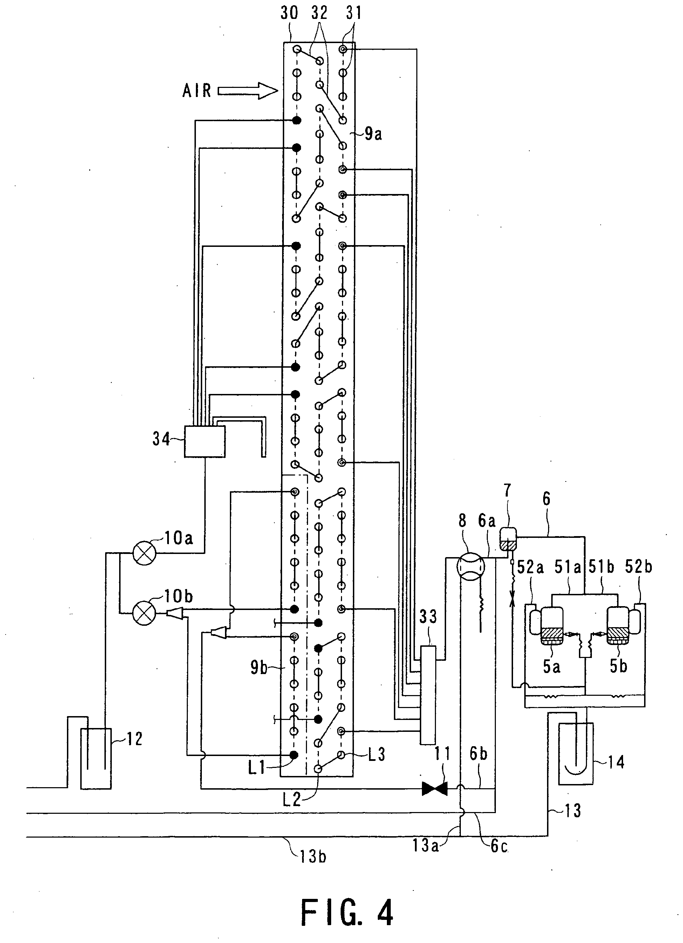

Fig. 4 is a schematic view of an outdoor heat exchanger according to the embodiment of the present invention.

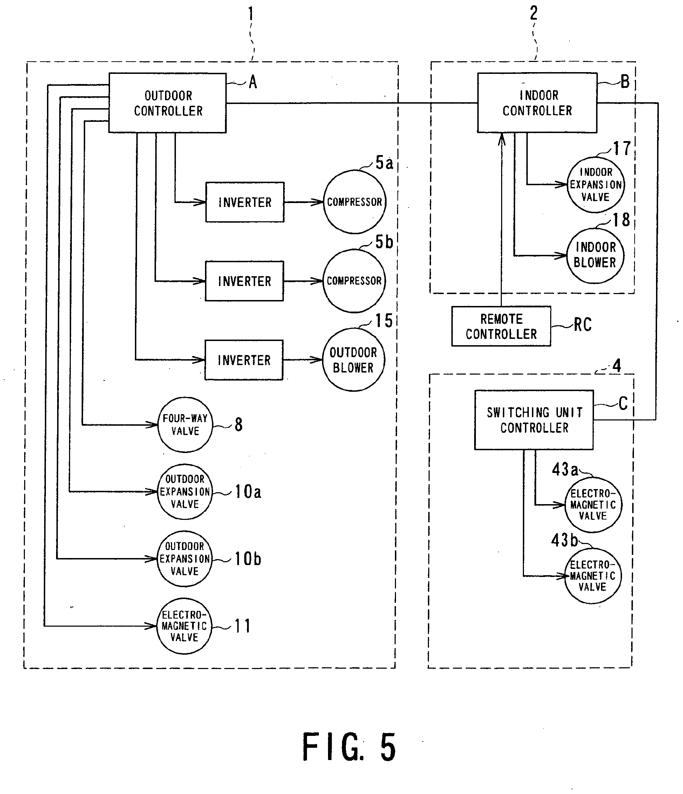

Fig. 5 is a control system diagram of the multi-type air conditioner according to the embodiment of the present invention.

### Best Mode for Carrying Out The Invention

A first embodiment of the present invention will be described hereunder with reference to the accompanying drawings.

Note that in the embodiment described below, the terms "upper", "lower", "right", "left, and the like showing directions are used herein in an illustrated state of the air conditioner or in view of a usual installation state thereof.

A multi-type air conditioner according to the present invention is composed of an outdoor unit 1 and a plurality of indoor units 2. The outdoor unit 1 is connected to the plurality of indoor units 2 by a main pipe 3, which is composed of a liquid pipe 3a, a gas ejection pipe 3b, and a gas suction pipe 3c, through switching units 4 for switching operations of the indoor units 2 to heating or cooling.

In the present invention, four sets of the indoor units 2a, 2b, 2c, and 2d are connected to corresponding four sets of the switching units 4a, 4b, 4c, and 4d, respectively.

The outdoor unit 1 accommodates two sets of capacity variable compressors 5a and 5b, an oil separator 7, a four-way valve 8, a first outdoor heat exchanger 9a, a second outdoor heat exchanger 9b, a first outdoor expansion valve 10a, a second outdoor expansion valve 10b, a refrigerant amount adjustment tank 12, a gas-liquid separator 14, an outdoor blower 15, and an outdoor electric parts box 21, and the like.

The outdoor electric parts box 21 accommodates an outdoor controller A and inverters for controlling the outdoor blower 15 and the compressor 5a, 5b, respectively and the like.

The indoor units 2 accommodate indoor heat exchangers 16, indoor expansion valves 17, indoor blowers 18, and an indoor controller B.

The switching units 4 accommodate liquid pipe connection pipes 41 for connecting the liquid pipe 3 to the liquid sides of the indoor heat exchangers 16, gas side connection pipes 42 for selectively connecting the gas ejection pipe 3b and the gas suction pipe 3c to the gas sides of the indoor heat exchangers 16, electromagnetic valves 43a, 43b, and a switching unit controller C.

The inverters for driving the compressor 5a, 5b and the outdoor blower 15, the four-way valve 8, the first outdoor expansion valve 10a, the second outdoor expansion valve 10b, and an electromagnetic valve 11 are connected to the outdoor controller A.

The indoor expansion valves 17 and the indoor blowers 18 are also connected to the indoor controller B.

Further, the electromagnetic valves 43a, 43b are connected to the stitching unit controller C.

In addition, the outdoor controller A determines opening and/or closing operation and degrees of openings of the various, valves in accordance with the inputs from various sensors (not shown) such as temperature sensors, pressure sensors, and the like disposed to the outdoor unit 1 and the indoor units 2 and also in accordance with the inputs from remote controllers RC connected to the indoor units 2, thereby controlling the various valves through the indoor controller B and the switching unit controller C.

Next, the outdoor unit 1 having a structure mentioned below will be explained.

The outdoor unit 1 has a horizontal partition plate 22 disposed in an approximately intermediate portion in a vertical direction, and the inside of the outdoor unit 1 is vertically partitioned by the horizontal partition plate 22.

An upper compartment on the horizontal partition plate 22 is arranged as a heat exchange chamber 23, and a lower compartment under it is arranged as a machine chamber 24.

The outer periphery of the heat exchange chamber 23 and the machine chamber 24 is surrounded by a plurality of side panels 25 which form an outer peripheral wall, and the upper surface of the heat exchange chamber 23 is closed by a top plate 26 having a cylindrical blow-out port 28. A bottom plate 27 is disposed to the bottom of the machine chamber 24, and the compressors 5a, 5b, the gas/liquid separator 14, the electromagnetic valve 11, and a refrigerant pipe for connecting them, the outdoor electric parts box 21, and the like are disposed on the bottom plate 27.

The first and second outdoor heat exchangers 9a, 9b are disposed in the heat exchange chamber 23 so as to face side surfaces thereof, and the second outdoor heat exchangers 9b are disposed to the lower portions of the first outdoor heat exchangers 9a on the upstream side thereof in an air flow direction.

The first and second outdoor expansion valves 10a, 10b are disposed in the vicinities of the outdoor heat exchangers. The outdoor blower 15 is disposed to an uppermost central portion of the heat exchange chamber 23.

Outdoor air suction ports 29 composed of a plurality of holes are formed to the side panels 25 in confrontation with the first and second outdoor heat exchangers 9a, 9b.

When the outdoor blower 15 is operated, an air flow path is formed such that outdoor air flows through the first and second outdoor heat exchangers 9a, 9b and is discharged to the outside from the blow-out port 28 after being guided into the heat exchange chamber 23.

Each of the first and second outdoor heat exchangers 9a, 9b is composed of: a plurality of heat exchange fins 30, which are disposed at predetermined intervals and each of which is composed of a longitudinally long rectangular thin plate; a plurality of heat exchange pipes 31, which pass through the fins 30 in a thickness direction; and a plurality of U-shaped pipes 32 for forming refrigerant flow paths by sequentially coupling the ends of the heat exchange pipes 31.

The heat exchange pips 31 are disposed in a plurality of rows in the lengthwise direction of the fins 30 and disposed in a plurality of columns in the air flow direction of the fins 30. Here, the heat exchange pips 31 are disposed to form heat exchange pipe trains L1, L2, L3 of, for example, 30 rows in the lengthwise direction of the fins 30 and three columns in the air flow direction from upstream thereof.

The first and second outdoor heat exchangers 9a, 9b share the heat exchange fins 30 and independently form the refrigerant flow paths to be described below, respectively.

When the first outdoor heat exchanger 9a is used as a condenser, the refrigerant flow path thereof is divided into a plurality of flow paths by a gas side flow dividing pipe 33 disposed on the gas side of the first outdoor heat exchanger 9a, and the divided flow paths converge in a liquid side flow separation pipe 34 disposed to the liquid side. When the first outdoor heat exchanger 9a is used as an evaporator, the refrigerant flow path thereof is divided into a plurality of flow paths by the liquid side flow separation pipe 34 and converge in the gas side flow dividing pipe 33.

The refrigerant flow path of the second outdoor heat exchanger 9b is formed by using 12 rows of the heat exchange pips 31 from below the heat exchange pipe train L1 located upstream of the air flow direction of the first outdoor heat exchanger 9a, to thereby form a single or a plurality of refrigerant flow paths independently of refrigerant flow path of the first outdoor heat exchanger 8a.

Then, the capacity of the second outdoor heat exchanger 9b is set to 15% to 30% of the capacity of the first outdoor heat exchanger 9a. When the capacity of the second outdoor heat exchanger 9b exceeds 30% of the capacity of the first outdoor heat exchanger 9a, condensation pressure is lowered when an outside temperature is low, thus decreasing a heating capacity. On the other hand, when the capacity of the second outdoor heat exchanger 9b is less than 15% of the capacity of the first outdoor heat exchanger 9a, the condensation pressure exceeds design pressure when an outside temperature is high, and thus, there is a fear that the air conditioner may not be operated.

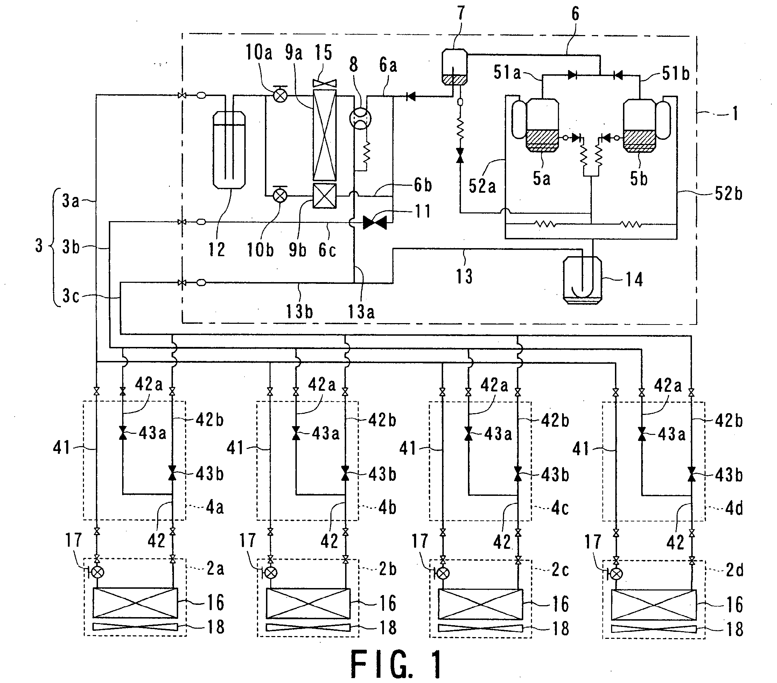

Hereunder, a refrigeration cycle of the multi-type air conditioner will be explained with reference to Fig. 1.

On the outdoor unit 1 side, ejection ports 51a, 51b of the compressors 5a, 5b are connected to an end of an ejection pipe 6. The other end of the ejection pipe 6 is divided into three ejection pipes 6a, 6b, 6c through the oil separator 7. The ejection pipe 6a is connected to the gas side of the first outdoor heat exchanger 9a through the four-way valve 8, the ejection pipe 6b is connected to the gas side of the second outdoor heat exchanger 9b, and the ejection pipe 6c is connected to an end of the gas ejection pipe 3b through the electromagnetic valve 11.

The liquid side of the first outdoor heat exchanger 9a is connected to an end of the liquid pipe 3a through the first outdoor expansion valve 10a and the refrigerant amount adjustment tank 12.

The liquid side of the second outdoor heat exchanger 9b is connected so as to be converged between the first outdoor expansion valve 10a and the refrigerant amount adjustment tank 12 through the second outdoor expansion valve 10b.

On the other hand, suction ports 52a, 52b of the compressors 5a, 5b are connected to an end of a suction pipe 13 through the gas liquid separator 14. The other end of the suction pipe 13 is divided into two suction pipes 13a, 13b, the suction pipe 13a is connected to the four-way valve 8, and the suction pipe 13b is connected to an end of the gas suction pipe 3c.

The four-way valve 8 shows a state that the ejection pipe 6 communicates with the first outdoor heat exchanger 9a "OFF" by solid lines and a state that the suction pipe 13 communicates with the first outdoor heat exchanger 9a "ON" by broken lines.

On the indoor unit side, each of the liquid pipe 3a, the gas ejection pipe 3b, and the gas suction pipe 3c is divided into a plurality of pipes, and they are connected to the indoor units 2a, 2b, 2c, 2d through the switching units 4a, 4b, 4c, 4d.

As described above, the liquid pipe connection pipes 41 of the switching units 4a, 4b, 4c, 4d connect the liquid pipe 3a to the liquid sides of the indoor heat exchangers 16, and the gas side connection pipes 42 selectively connect the gas ejection pipe 3b and the gas suction pipe 3c to the gas sides of the indoor heat exchangers 16.

The gas side connection pipes 42 are connected, at one ends, to the gas sides of the indoor heat exchangers 16, and the other ends thereof are divided into gas side connection pipes 42a, 42b. The gas side connection pipes 42a are connected to one end of the gas ejection pipe 3b through the electromagnetic valves 43a, and the gas side connection pipes 42b are connected to one end of the gas suction pipe 3c through the electromagnetic valves 43b.

When the electromagnetic valves 43a are opened and the electromagnetic valves 43b are closed, the gas ejection pipe 3b communicates with the gas sides of the indoor heat exchangers 16, whereas when the electromagnetic valves 43a are closed and the electromagnetic valves 43b are opened, the gas suction pipe 3c communicates with the gas sides of the indoor heat exchangers 16.

The multi-type air conditioner of the present invention of the above arrangement carries out operations described below according to the required capacities of the indoor units 2a, 2b, 2c, 2d disposed in the respective locations.

### (Heating Operation for All Rooms)

When all the indoor units 2a, 2b, 2c, 2d perform the heating operation, the multi-type air conditioner performs the full heating operation. In this heating operation, the first outdoor heat exchanger 9a is used as an evaporator, and the indoor heat exchangers 16 are used as condensers.

In the indoor unit 1, the electromagnetic valve 11 of the ejection pipe 6c is opened and a high pressure gas refrigerant, which is ejected from either one or both of the compressors 5a, 5b, is supplied to the gas ejection pipe 3b through the ejection pipes 6, 6c.

At that time, the four-way valve 8 is turned on to thereby communicate the gas side of the first outdoor heat exchanger 9a with the suction pipe 13a. In order to use the first outdoor heat exchanger 9a as the evaporator, the first outdoor expansion valve 10a is opened a predetermined degree of angle, and the second outdoor expansion valve 10b is entirely closed because the second outdoor heat exchanger 9b is not used.

The electromagnetic valves 43a of the switching units 4 are opened and the electromagnetic valves 43b thereof are closed. With this operation, the gas ejection pipe 3b communicates with the gas sides of the indoor heat exchangers 16. The high pressure gas refrigerant that flows in the gas ejection pipe 3b enters the gas sides of the indoor heat exchangers 16 through the gas side connection pipes 42a, the electromagnetic valves 43a, and the gas side connection pipes 42.

In the indoor units 2, the indoor heat exchangers 16 are used as condensers, and the indoor expansion valves 17 are opened at a predetermined degree of angle, respectively, so as to adjust a flow rate.

The high pressure gas refrigerant, which has entered the indoor heat exchangers 16, exchanges heat with the indoor air introduced into the indoor units by the indoor blowers 18 and condenses, and then, it flows out from the liquid sides of the indoor heat exchangers 16. The indoor air subjected to the heat exchanging with the refrigerant is made to hot air and supplied to the outside of the indoor units 2 by means of the indoor blowers 18.

The high pressure liquid refrigerant, which has flown out from the liquid sides of the indoor heat exchangers 16, enters the liquid pipe 3a through the indoor expansion valves 17 and the liquid pipe connection pipes 41.

The high pressure liquid refrigerant, which has entered the liquid pipe 3a, returns to the outdoor unit 1, passes through the refrigerant amount adjustment tank 12, and then enters the liquid side flow separation pipe 34 after its pressure is reduced during the passing through the first outdoor expansion valve 10a. The refrigerant, which is caused to separately flow in the plurality of refrigerant flow paths by the liquid side flow separation pipe 34, enters the first outdoor heat exchanger 9a from the liquid side thereof.

The refrigerant, which has entered the first outdoor heat exchanger 9a, exchanges heat with the outdoor air guided into the heat exchange chamber 23 by the outdoor blower 15, is made to a low pressure gas refrigerant, and then flows out from the first outdoor heat exchanger 9a. The outdoor air subjected to the heat exchanging with the refrigerant is cooled and blown out from the blow-out port 28 by the outdoor blower 15.

The low pressure gas refrigerant, which has flown out from the first outdoor heat exchanger 9a, converses in the gas side flow dividing pipe 33, enters the suction pipe 13a through the four-way valve 8, and is then sucked into either one or both of the compressors 5a, 5b through the suction pipe 13 and the gas liquid separator 14.

### (Cooling Operation for All Rooms)

When all the indoor units 2 perform the cooling operation, the multi-type air conditioner performs the full cooling operation. In this operation, the first outdoor heat exchanger 9a is used as a condenser, and the indoor heat exchangers 16 are used as evaporators.

In the outdoor unit 1, the electromagnetic valve 11 of the ejection pipe 6c is closed, and the four-way valve 8 is turned off.

A high pressure gas refrigerant ejected from either one or both of the compressors 5a, 5b enter the gas side flow separation pipe 33 through the ejection pipes 6, 6a and the four-way valve 8. The refrigerant, which has been separately flown into a plurality of refrigerant flow paths by the gas side flow separation pipe 33, enters the first outdoor heat exchanger 9a from the gas side thereof and exchanges heat with the outdoor air guided into the heat exchange chamber 23 by the outdoor blower 15, and condenses to a high pressure liquid refrigerant, which then flows out from the first outdoor heat exchanger 9a. The outdoor air subjected to the heat exchanging with the refrigerant is heated and blown out from the blow-out port 28 by means of the outdoor blower 15.

The high pressure liquid refrigerant, which has been flown out from the first outdoor heat exchanger 9a, converges in the liquid side flow separation pipe 34, and then enters the liquid pipe 3b through the first outdoor expansion valve 10a and the refrigerant amount adjustment tank 12.

In order to use the first outdoor heat exchanger 9a as the condenser, the first outdoor expansion valve 10a is opened at a predetermined degree of angle, and the second outdoor expansion valve 10b is entirely closed because the second outdoor heat exchanger 9b is not used.

Since the four-way valve 8 is turned off and the electromagnetic valve 11 is closed, the gas ejection pipe 3b is shut off and the refrigerant does not flow.

The electromagnetic valves 43a of the switching units 4 are closed, and the electromagnetic valves 43b thereof are opened. With this operation, the gas suction pipe 3c communicates with the gas sides of the indoor heat exchangers 16. The high pressure liquid refrigerant, which flows in the liquid pipe 3a, enters the liquid sides of the indoor heat exchangers 16 through the liquid pipe connection pipe 41.

In the indoor units 2, the indoor heat exchangers 16 are used as evaporators, and the indoor expansion valves 17 are opened at a predetermined degree of angle, respectively, so as to reduce the pressure of the refrigerant.

The high pressure liquid refrigerant, which has entered the indoor heat exchangers 16 through the indoor expansion valves 17, exchanges heat with the indoor air guided into the indoor units by the indoor blowers 18 and is evaporated. Then, the refrigerant flows out from the gas sides of the indoor heat exchangers 16. The indoor air subjected to the heat exchanging with the refrigerant is made to cool air and supplied to the outside of the indoor units 2 by means of the indoor blowers 18.

The low pressure gas refrigerant, which has been flown out from the gas sides of the indoor heat exchangers 16, enters the gas suction pipe 3c through the gas side connection pipes 42, the electromagnetic valves 43b, and the gas side connection pipes 42b.

The low pressure gas refrigerant, which has entered the gas suction pipe 3c, returns to the outdoor unit 1 and sucked into either one or both of the compressors 5a, 5b through the suction pipe 13b, 13 and the gas liquid separator 14.

### (Simultaneous Cooling/Heating Operation (Mainly Heating))

When the sum of a heating request capacity requested by the indoor side exceeds the sum of a cooling request capacity requested thereby, the multi-type air conditioner performs the simultaneous cooling/heating operation with mainly heating. When it is assumed that, for example, the indoor units 2a, 2b, 2c carry out the heating operation and the indoor unit 2d carries out the cooling operation, the first outdoor heat exchanger 9a and the indoor heat exchanger 16 of the indoor unit performing the cooling operation are used as evaporators, and the indoor heat exchangers 16 of the indoor units performing the heating operation are used as condensers.

In the outdoor unit 1, the electromagnetic valve 11 of the ejection pipe 6c is opened, and a high pressure gas refrigerant ejected from either one or both of the compressors 5a, 5b are supplied to the gas ejection pipe 3b through the ejection pipe 6, 6c. The four-way valve 8 is turned on, and the gas side of the first outdoor heat exchanger 9a communicates with the suction pipe 13a.

In order to use the first outdoor heat exchanger 9a as the evaporator, the first outdoor expansion valve 10a is opened at a predetermined degree of angle, and the second outdoor expansion valve 10b is entirely closed because the second outdoor heat exchanger 9b is not used.

The electromagnetic valves 43a of the switching units 4a, 4b, 4c are opened, and the electromagnetic valves 43b thereof are closed. In the switching unit 4d, the electromagnetic valve 43a is closed, and the electromagnetic valve 43b thereof is opened. With this operation, the gas ejection pipe 3b communicates with the gas sides of the indoor heat exchangers 16 of the indoor units 2a, 2b, 2c, and the gas suction pipe 3c communicates with the indoor heat exchanger 16 of the indoor unit 2d.

The high pressure gas refrigerant, which flows in the gas ejection pipe 3b, enters the gas sides of the indoor heat exchangers 16 of the indoor units 2a, 2b, 2c through the gas side connection pipes 42a of the switching units 4a, 4b, 4c, the electromagnetic valves 43a, and the gas side connection pipes 42a.

In the indoor units 2a, 2b, 2c, the indoor heat exchanger 16 are used as condensers, and the indoor expansion valves 17 are opened at a predetermined degree of angle, respectively, so as to adjust a flow rate.

After the high pressure gas refrigerant, which has entered the indoor heat exchangers 16 of the indoor units 2a, 2b, 2c, exchanges heat with the indoor air guided into the indoor units by the indoor blowers 18 and condenses, it flows out from the liquid sides of the indoor heat exchangers 16.

The indoor air subjected to the heat exchanging with the refrigerant is made to hot air and supplied to the outside of the indoor units 2a, 2b, 2c by means of the indoor blowers 18. The high pressure liquid refrigerant, which has flown out from the liquid sides of the indoor heat exchangers 16 of the indoor units 2a, 2b, 2c enters the liquid pipe 3a through the indoor expansion valves 17 and the liquid pipe connection pipes 41 of the switching units 4a, 4b, 4c. The refrigerant; which has entered the liquid pipe 3a, is separated to a refrigerant returned to the outdoor unit 1 and a refrigerant that enters the indoor unit 2d for carrying out the cooling operation.

The refrigerant, which has returned from the liquid pipe 3a to the outdoor unit 1, is subjected to the pressure reduction by the outdoor expansion valve 10a after passing through the refrigerant amount adjustment tank 12 and enters the liquid side flow separation pipe 34. The refrigerant, which has been separated to a plurality of refrigerant flow paths by the liquid side flow separation pipe 34, enters the first outdoor heat exchanger 9a from the liquid side thereof.

The refrigerant, which has entered the first outdoor heat exchanger 9a, exchanges heat with the outdoor air guided into the heat exchange chamber 23 by means of the outdoor blower 15, is made to a low pressure gas refrigerant, and flows out from the first outdoor heat exchanger 9a. The outdoor air subjected to the heat exchanging with the refrigerant is cooled and blown out from the blow-out port 28 by the outdoor blower 15. The low pressure gas refrigerant, which has flown out from the first outdoor heat exchanger 9a, converges in the gas side flow separation pipe 33 and then enters the suction pipe 13a through the four-way valve 8.

On the other hand, the refrigerant, which has separately entered the indoor unit 2d, in the cooling operation in the liquid pipe 3a, enters the liquid side of the indoor heat exchanger 16 through the liquid pipe connection pipe 41 of the switching unit 4d.

In the indoor unit 2d, the indoor heat exchanger 16 is used as an evaporator, and the indoor expansion valve is opened at a predetermined degree of angle to reduce the pressure of the refrigerant. The high pressure liquid refrigerant, which has entered the indoor heat exchanger 16 of the indoor unit 2d through the indoor expansion valve 17, exchanges the heat with the indoor air guided into the indoor unit by means of the indoor blower 18 and is evaporated and then flows out from the gas side of the indoor heat exchanger 16.

The indoor air subjected to the heat exchanging with the refrigerant is made to cool the air and supplied to the outside of the indoor unit 2d by means of the indoor blower 18. The low pressure gas refrigerant, which has flown out from the gas side of the indoor heat exchanger 16 of the indoor unit 2d, enters the gas suction pipe 3c through the gas side connection pipe 42, the electromagnetic valves 43b, and the gas side connection pipe 42b of the switching unit 4d. The refrigerant, which has entered the gas suction pipe 3c, returns to the outdoor unit, enters the suction pipe 13b, and then converges with the refrigerant, which has returned from the indoor units 2a, 2b, 2c for heating to the outdoor unit 1 and flown into the suction pipe 13a, in the suction pipe 13 and sucked into either one or both of the compressors 5a, 5b through the gas liquid separator 14.

### (Simultaneous Cooling/Heating Operation with Mainly Cooling)

When the sum of a cooling request capacity requested by the indoor side exceeds the sum of a heating request capacity requested thereby, the multi-type air conditioner performs simultaneous cooling/heating operation with mainly cooling operation. When it is assumed, for example, that the indoor units 2a, 2b, 2c carry out the cooling operation and the indoor unit 2d carries out the heating operation, the second outdoor heat exchanger 8b and the indoor heat exchanger 16 of the indoor unit performing the heating operation are used as condensers, and the indoor heat exchangers 16 of the indoor units performing the cooling operation are used as evaporators.

In the indoor unit 1, the four-way valve 8 is turned on, the electromagnetic valve 11 of the ejection pipe 6c and the second outdoor expansion valve 10b are opened, a high pressure gas refrigerant ejected from either one or both of the compressors 5a, 5b enter the gas side of the second outdoor heat exchange 9b through the ejection pipes 6, 6b and enter the gas ejection pipe 3b through the ejection pipe 6, 6c and the electromagnetic valve 11.

In order to use the second outdoor heat exchanger 9b as the condenser, the second outdoor expansion valve 10b is opened at a predetermined degree of angle, and the first outdoor expansion valve 10a is closed because the first outdoor heat exchanger 9a is not used. The high pressure gas refrigerant, which has entered the second outdoor heat exchanger 9b, exchanges heat with the outdoor air guided into the heat exchange chamber 23 by means of the outdoor blower 15 and condenses, and then flows out from the second outdoor heat exchanger 9b in a high pressure liquid state.

The outdoor air subjected to the heat exchanging with the refrigerant is heated and blown out from the blow-out port 28 by the outdoor blower 15. The high pressure liquid refrigerant, which has flown out from the second outdoor heat exchanger 9b, enters the liquid pipe 3b through the second outdoor expansion valve 10b and the refrigerant amount adjustment tank 12.

The electromagnetic valves 43b of the switching units 4a, 4b, 4c are opened, and the electromagnetic valves 43a thereof are closed. In the switching unit 4d, the electromagnetic valve 43b is closed, and the electromagnetic valve 43a is opened. With this operation, the gas ejection pipe 3b communicates with the gas side of the indoor heat exchanger 16 of indoor unit 2d, and the gas suction pipe 3c communicates with the gas sides of the indoor heat exchangers 16 of the indoor unit 2a, 2b, 2c.

The high pressure gas refrigerant, which flows in the gas ejection pipe 3b, enters the gas side of the indoor heat exchanger 16 of the indoor unit 2d through the gas side connection pipe 42a, the electromagnetic valve 43a, and the gas side connection pipe 42a of the switching unit 4d.

In the indoor unit 2d, the indoor heat exchanger 16 is used as the condenser, and the indoor expansion valve 17 is opened at a predetermined degree of angle to adjust a flow rate. The high pressure gas refrigerant, which has entered the indoor heat exchanger 16, exchanges heat with the indoor air guided into the indoor unit 2d by the indoor blower 18 and condenses, and then flows out from the liquid side of the indoor heat exchanger 16.

The indoor air subjected to the heat exchanging with the refrigerant is made to hot air and supplied to the outside of the indoor unit 2d by means of the indoor blower 18.

The high pressure liquid refrigerant, which has flown from the liquid side of the indoor heat exchanger 16, enters the liquid pipe 3a through the indoor expansion valve 17 and the liquid pipe connection pipe 41 of the switching unit 4d. The high pressure liquid refrigerant, which has entered the liquid pipe 3a from the outdoor unit 2d, converges with the high pressure liquid refrigerant condensed by the second outdoor heat exchanger 9b. The converged high pressure liquid refrigerant enters the liquid sides of the indoor heat exchangers 16 through the liquid pipe connection pipes 41 of the switching unit 4a, 4b, 4c.

In the indoor units 2a, 2b, 2c, the indoor heat exchangers 16 are used as evaporators, and the indoor expansion valves 17 are opened at a predetermined degree of angle, respectively, so as to reduce the pressure of the refrigerant. The high pressure liquid refrigerant, which has entered the indoor heat exchangers 16 through the indoor expansion valves 17, exchanges heat with the indoor air guided into the indoor units 2a, 2b, 2c by the indoor blowers 18 and evaporates, and then flows out from gas sides of the indoor heat exchangers 16.

The indoor air subjected to the heat exchanging with the refrigerant is made to cool the air and supplied to the outside of the indoor units 2a, 2b, 2c by means the indoor blowers 18.

The low pressure gas refrigerant, which has flown out from the gas sides of the indoor heat exchangers 16 of the indoor units 2a, 2b, 2c, enters the gas suction pipe 3c through the gas side connection pipes 42, the electromagnetic valves 43b, and gas side connection pipes 42b of the switching unit 4a, 4b, 4c. The low pressure gas refrigerant, which has entered the gas suction pipe 3c, returns to the outdoor unit 1 and sucked into the compressors 5a, 5b through the suction pipes 13b, 13, and the gas liquid separator 14.

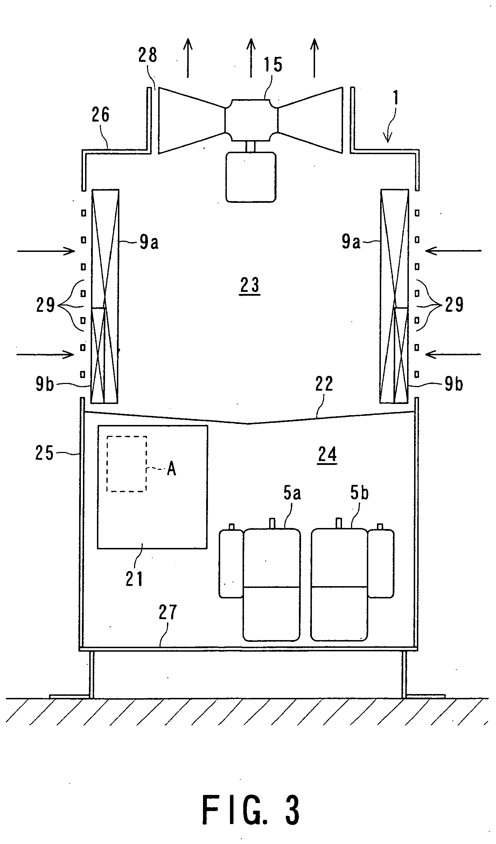

In the respective operations described above, since the outdoor blower 15 is installed in the upward blowing-out mode as shown in Fig. 3, the flow rate of the outdoor air guided into the heat exchange chamber 23 is smaller in a lower portion than that in an upper portion in the machine chamber 23. Accordingly, the first outdoor heat exchanger 9a tends to have a large heat exchanging amount and the second outdoor heat exchanger 9b tends to have a small heat exchanging amount.

Since the second outdoor heat exchangers 9b are disposed to the lower portions of first columns of the first outdoor heat exchangers 9a, in the simultaneous cooling/heating operation with mainly cooling operation in which the second outdoor heat exchanger 9b is used as the condenser, a sufficient condensing temperature can be kept in the indoor unit for carrying out the heating operation without accelerating the heat exchanging even if an outside temperature is low, thereby preventing the degradation of the heating capacity.

Further, since the capacity of the second outdoor heat exchanger 9b is set to 15% to 30% of the first outdoor heat exchanger 9a, when an outside temperature is low, the condensation pressure can be kept, and when an outside temperature is high, the condensation pressure does not exceed the design pressure, thereby performing the comfortable air conditioning at all times.

Furthermore, in the overall (full) heating operation, in which the first outdoor heat exchangers 9a are used as the evaporators, and in the simultaneous cooling/heating operation with mainly heating operation, when the operation is continued for a long time, the lower portions of the first outdoor heat exchangers 9a are frosted and the heat exchanging efficiency is deteriorated. To cope with this problem, defrosting operation is carried out. However, the frost melted by the defrosting operation is liable to drop along the fins 30 and to accumulate in the lower portions of the outdoor heat exchangers 9a. Thus, when the overall heating operation, in which the first outdoor heat exchangers 9a are used as the evaporators, and the simultaneous cooling/heating operation with mainly heating operation is carried out again, the accumulating frost and water are refrigerated, and thus, the outdoor heat exchangers may be broken.

When the second outdoor heat exchangers 9b are not used as the condensers without being supplied with the high pressure gas refrigerant from the ejection pipe 6b different from the above-mentioned, the second outdoor expansion valve 10b is closed, and thus, the high pressure gas refrigerant is forcibly accumulated. Therefore, in the portion in which the high pressure gas refrigerant is forcibly accumulated, the frosting in the portion can be suppressed as well as the disadvantage mentioned above due to the suppression of the defrosting. Since the frosting can be suppressed, the heat exchanging amount of the first outdoor heat exchangers 9a is not reduced, thereby effectively performing the operation.

Still furthermore, since the first and second outdoor heat exchangers 9a, 9b are formed of the common fins 30, the number of parts can be reduced, thereby reducing the cost as well as the space of a housing.

In addition, it is also possible to commonly arrange a standard multi-type air conditioner for carrying out the overall cooling operation or the overall heating operation and the heat exchange chamber 23 of the outdoor unit 1. With this arrangement, the cost can be further reduced.

## Claims

1. A multi-type air conditioner comprising:
an outdoor unit (1) provided with an outdoor controller (A);
a plurality of indoor units (2a, 2b, 2c, 2d) provided with indoor controllers (B);
switching units (4a, 4b, 4c, 4d) for switching operation of the plurality of indoor units (2a, 2b, 2c, 2d); and
a main pipe (3) composed of a liquid pipe (3a), a gas ejection pipe (3b) and a gas suction pipe (3c) for connecting the outdoor unit (1) to the plurality of indoor units (2a, 2b, 2c, 2d) through the switching units (4a, 4b, 4c, 4d), in which an overall cooling operation in which all the indoor units (2a, 2b, 2c, 2d) performs a cooling operation, an overall heating operation in which all the indoor units (2a, 2b, 2c, 2d) performs a heating operation and a simultaneous cooling/heating operation in which the indoor units perform cooling and heating operation simultaneously,
wherein the outdoor unit (1) constitutes an outdoor heat exchanging unit including a first outdoor heat exchanger (9a) used as a condenser in the cooling operation and used as an evaporator in the heating operation and a second outdoor heat exchanger (9b) used as a condenser in the simultaneous cooling/ heating, operation,
**characterized in that** the second outdoor heat exchanger (9b) is disposed on an upstream side of the first outdoor heat exchanger (9a) in an air flow direction.

2. The air conditioner according to claim 1, wherein the outdoor unit (1) includes an outdoor blower (15) blowing out air upward, the outdoor blower is disposed above the first outdoor heat exchanger (9a), and the second outdoor heat exchanger (9b) is disposed below the first outdoor heat exchanger (9a).

3. The air conditioner according to claim 1, wherein the second outdoor heat exchanger (9b) has a capacity of 15% to 30% with respect to a capacity of the first outdoor heat exchanger (9a).

## Patentansprüche

1. Multi-Klimaanlage, mit
einer Außeneinheit (1), die mit einer Außensteuerung (A) vorgesehen ist,
einer Mehrzahl an Inneneinheiten (2a, 2b, 2c, 2d), die mit Innensteuerungen (B) vorgesehen sind,
Schalteinheiten (4a, 4b, 4c, 4d) zum Schalten des Betriebs der Mehrzahl an Inneneinheiten (2a, 2b, 2c, 2d), und
einem Hauptrohr (3), das aus einer Flüssigkeitsleitung (3a), einer Gasausstoßungsleitung (3b) und einer Gasansaugleitung (3c) gebildet ist, zum Verbinden der Außeneinheit (1) mit der Mehrzahl an Inneneinheiten (2a, 2b, 2c, 2d) durch die Schalteinheiten (4a, 4b, 4c, 4d) gebildet ist, bei welchen ein Gesamtkühlungsbetrieb, bei welchem alle der Inneneinheiten (2a, 2b, 2c, 2d) einen Kühlungsbetrieb ausführen, ein Gesamtheizbetrieb, bei welchem die Inneneinheiten (2a, 2b, 2c, 2d) einen Heizbetrieb ausführen und einen gleichzeitigen Kühlungs-/Heizbetrieb, bei welchem die Inneneinheiten den Kühlungs-/Heizbetrieb gleichzeitig ausführen,
bei der die Außeneinheit (1) eine Außenwärmetauscheinheit bildet, die einen ersten Außenwärmetauscher (9a), der als ein Kondensator in dem Kühlungsbetrieb verwendet wird, und als ein Evaporator bei dem Heizbetrieb verwendet wird, und einen zweiten Außenwärmetauscher (9d) aufweist, der als Kondensator bei dem gleichzeitigen Kühlungs-/Heizbetrieb verwendet wird,
**dadurch gekennzeichnet, dass** der zweite Außenwärmetauscher (9b) an einer stromaufwärtigen Seite des ersten Außenwärmetauschers (9a) in einer Luftströmungsrichtung angeordnet ist.

2. Klimaanlage nach Anspruch 1, bei der die Außeneinheit (1) ein Außengebläse (15), das Luft nach oben herausbläst, aufweist, bei der das Außengebläse unterhalb des ersten Außenwärmetauschers (9a) angeordnet ist, und der zweite Außenwärmetauscher (9b) unterhalb des ersten Außenwärmetauschers (9a) angeordnet ist.

3. Klimaanlage nach Anspruch 1, bei der der zweite Außenwärmetauscher (9b) eine Kapazität von 15 % bis 30 % in Bezug auf eine Kapazität des ersten Außenwärmetauschers (9a) aufweist.

## Revendications

1. Climatiseur multitype comprenant :
une unité extérieure (1) pourvue d'un dispositif de commande extérieur (A) ;
une pluralité d'unités intérieures (2a, 2b, 2c, 2d) pourvues de dispositifs de commande intérieurs (B) ;
des unités de commutation (4a, 4b, 4c, 4d) pour commuter le fonctionnement de la pluralité d'unités intérieures (2a, 2b, 2c, 2d) ; et
un tuyau principal (3) composé d'un tuyau pour liquide (3a), d'un tuyau d'éjection de gaz (3b) et d'un tuyau d'aspiration de gaz (3c) pour raccorder l'unité extérieure (1) à la pluralité d'unités intérieures (2a, 2b, 2c, 2d) par l'intermédiaire des unités de commutation (4a, 4b, 4c, 4d), dans lesquelles une opération de refroidissement global dans laquelle toutes les unités intérieures (2a, 2b, 2c, 2d) réalisent une opération de refroidissement, une opération de chauffage global dans laquelle toutes les unités intérieures (2a, 2b, 2c, 2d) réalisent une opération de chauffage et une opération de refroidissement/chauffage simultanés dans laquelle les unités intérieures réalisent simultanément une opération de refroidissement et de chauffage,
dans lequel l'unité extérieure (1) constitue une unité d'échange de chaleur extérieure comportant un premier échangeur de chaleur extérieur (9a) utilisé comme condenseur dans l'opération de refroidissement et utilisé comme évaporateur dans l'opération de chauffage et un second échangeur de chaleur extérieur (9b) utilisé comme condenseur dans l'opération de refroidissement/chauffage simultanés,
**caractérisé en ce que** le second échangeur de chaleur extérieur (9b) est disposé sur un côté amont du premier échangeur de chaleur extérieur (9a) dans une direction d'écoulement d'air.

2. Climatiseur selon la revendication 1, dans lequel l'unité extérieure (1) comporte une soufflante extérieure (15) soufflant de l'air vers le haut, la soufflante extérieure est disposée au-dessus du premier échangeur de chaleur extérieur (9a), et le second échangeur de chaleur extérieur (9b) est disposé en dessous du premier échangeur de chaleur extérieur (9a).

3. Climatiseur selon la revendication 1, dans lequel le second échangeur de chaleur extérieur (9b) a une capacité de 15 % à 30 % par rapport à une capacité du premier échangeur de chaleur extérieur (9a).
